# EUROPÄISCHE PATENTSCHRIFT

(11) **EP 1 133 530 B1**
(45) Veröffentlichungstag und Bekanntmachung des Hinweises auf die Patenterteilung: **07.05.2003**
(21) Anmeldenummer: 99958072.3
(22) Anmeldetag: 18.11.1999
(51) Int. Cl.: C08L 101/00, C08K 9/04

(54) **THERMOPLASTISCHE NANOKOMPOSIT-HALTIGE MATERIALIEN MIT ELASTOMER-ZUSATZ**
THERMOPLASTIC MATERIALS CONTAINING NANOCOMPOSITES AND AN ADDITIONAL ELASTOMER
MATERIAUX THERMOPLASTIQUES CONTENANT DES NANOCOMPOSITES ET UN ELASTOMERE ADDITIONNEL

(30) Priorität: 24.11.1998 DE 19854170
(43) Veröffentlichungstag der Anmeldung: 19.09.2001
(73) Patentinhaber: BASF AKTIENGESELLSCHAFT, 67056 Ludwigshafen (DE)
(72) Erfinder: GRUTKE, Stefan, D-67434 Neustadt (DE); MC KEE, Graham, Edmund, D-67433 Neustadt (DE); MEHLER, Christof, D-67061 Ludwigshafen (DE)
(74) Vertreter: Isenbruck, Günter, Dr.
(86) Internationale Anmeldenummer: EP9908870
(87) Internationale Veröffentlichungsnummer: WO00031185

(56) Entgegenhaltungen:
- DE-A- 19 742 868

## Beschreibung

Die Erfindung betrifft thermoplastische Nanocomposites mit ausgeglichen vorteilhaftem mechanischem Profil.

Verbundmaterialien aus organischen Polymeren wie Polyamiden und schichtförmigen Silikaten sind bekannt. Diese Materialien zeichnen sich durch eine hohe Steifigkeit aus. Neben einer Verbesserung der Steifigkeit nimmt jedoch die Zähigkeit durch den Zusatz der Schichtsilikate ab.

EP-B 0 387 903 schlägt daher die Verwendung von Schlagzähmodifiern in thermoplastischen Polypropylenharzzusammensetzungen vor. Die offenbarten Zusammensetzungen enthalten ein modifiziertes Polypropylen, das z.B. mit ungesättigten Carbonsäuren gepfropft ist, ein mit Tonmineralien modifiziertes Polyamid und zusätzlich einen Ethylen-α-Olefin-Copolymerkautschuk oder ein Derivat davon und/oder ein Blockpolymer und/oder einen anorganischen Füllstoff. Ein spezieller Kautschuk zur Erhöhung der Schlagzähigkeit wird nicht offenbart.

EP-B 0 352 042 beschreibt eine hochrigide und schlagzähe Harzmischung aus einem Polyamidharz-Kompositmaterial, das neben einem geschichteten Silikat aus einem nicht weiter definierten, die Schlagzähigkeit verbessernden Harz und/oder einem Polyphenyletherharz besteht. Die Teilchengrößen des die Schlagzähigkeit verbessernden Harzes sind nicht definiert.

Eine Aufgabe der vorliegenden Erfindung ist es, thermoplastische Nanocomposites mit einem ausgeglichen vorteilhaften mechanischen Profil bereitzustellen. Diese sollen verbesserte mechanische und verarbeitungstechnische Eigenschaften, insbesondere eine hervorragende Steifigkeit bei gleichzeitig hervorragender Zähigkeit aufweisen.

Diese Aufgabe wird gelöst durch thermoplastische Nanocomposites, enthaltend
a) einen thermoplastischen Kunststoff (A),
b) mindestens eine Verbindung (B), die strukturell aus negativ geladenen Phyllosilikaten und zwischen diese eingelagerten Kationen aufgebaut ist (delaminierte Phyllosilikate), die gleichmäßig in der Komponente (A) dispergiert ist,
c) einen Kautschuk oder Kautschukmischungen (C).

Die erfindungsgemäßen thermoplastischen Nanocomposites sind dadurch gekennzeichnet, daß die Komponente (C) eine Teilchengrößenverteilung mit einem d(50)-Wert zwischen 15 nm und 500 nm aufweist.

Diese erfindungsgemäß verwendeten kleinteiligen Kautschuke oder Kautschukmischungen (C) besitzen in den eingesetzten Phyllosilikaten (Schichtsilikaten) ähnliche Dimensionen. Dadurch wird eine bessere Dispergierung der Phyllosilikate in dem thermoplastischen Kunststoff erreicht.

Die Verbesserung der Zähigkeit unter Beibehaltung der Steifigkeit in den erfindungsgemäßen Thermoplasten ist dabei überraschend, da solche kleinteiligen Kautschuke oder Kautschukmischungen, wie sie erfindungsgemäß verwendet werden, in thermoplastischen Polymerzusammensetzungen, die keine Phyllosilikate enthalten, keine signifikante Erhöhung der Zähigkeit bewirken.

Die erfindungsgemäß eingesetzten kleinteiligen Kautschuke oder Kautschukmischungen (C) weisen eine Teilchengrößenverteilung mit einem d(50)-Wert zwischen 15 und 500 nm, bevorzugt zwischen 20 nm und 250 nm auf. Diese Kautschukteilchen entsprechen somit in ihren Dimensionen denen von delaminierten Phyllosilikaten, die üblicherweise eine maximale Seitenlänge von 200 nm bis 2 µm und eine Dicke von 8 bis 100 Å aufweisen.

Der d(50)-Wert wird dabei als der Wert definiert, bei dem 50 Gew.-% der Teilchen eine Durchmesser größer und 50 Gew.-% der Teilchen einen Durchmesser kleiner als diesen Wert besitzen.

Der verwendete Anteil der Komponente (C) an der Gesamtmasse der thermoplastischen Nanocomposites ist gering. Im allgemeinen werden 0,1 bis 15 Gew.-%, bevorzugt 1 bis 10 Gew.-% und besonders bevorzugt 2 bis 4 Gew.-% der Komponente (C), bezogen auf die Gesamtmasse des thermoplastischen Nanocomposites, eingesetzt.

Die Komponente (C) wird in den erfindungsgemäßen thermoplastischen Nanocomposites zur Erhöhung der Schlagzähigkeit verwendet. Die Steifigkeit und Festigkeit der thermoplastischen Nanocomposites wird durch die Verwendung der Komponente (C) nicht wesentlich, vorzugsweise gar nicht, beeinträchtigt.

Vorzugsweise enthalten die erfindungsgemäßen thermoplastischen Nanocomposites
a) 10 bis 99,89 Gew.-% der Komponente (A),
b) 0,01 bis 15 Gew.-%, bevorzugt 1 bis 12 Gew.-%, besonders bevorzugt 2 bis 7 Gew.-% der Komponente (B),
c) 0,1 bis 15 Gew.-%, bevorzugt 1 bis 10 Gew.-%, besonders bevorzugt 2 bis 4 Gew.-% der Komponente (C),
d) 0 bis 50 Gew.-% weiterer Füllstoffe (D),
e) 0 bis 50 Gew.-% weiterer Zusatzstoffe (E),
worin die Summe aller Komponenten 100 Gew.-% ergibt.

### Komponente A: thermoplastische Kunststoffe

Die thermoplastischen Kunststoffe sind vorzugsweise ausgewählt aus Polyamiden, Vinylpolymeren, Polyestern, Polycarbonaten, Polyaldehyden und Polyketonen. Besonders bevorzugt sind die thermoplastischen Kunststoffe Polyamide.

Als polyamidbildende Monomere kommen Lactame wie ε-Caprolactam, Önantlactam, Capryllactam und Lauryllactam sowie deren Mischungen, bevorzugt ε-Caprolactam in Frage. Als weitere polyamidbildende Monomere können beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure, Diamine wie C₄- bis C₁₂-Alkyldiamine, insbesondere mit 4 bis 8 Kohlenstoffatomen wie Hexamethylendiamin, Tetramethylendiamin oder Octamethylendiamin, ferner m-Xylylendiamin, Bis-(4-aminophenyl)-methan, Bis-(4-aminophenyl)-propan-2,2 oder Bis-(4-aminocyclohexyl)-methan, sowie Mischungen von Dicarbonsäuren und Diaminen jeweils für sich in beliebigen Kombinationen im Verhältnis zueinander, jedoch vorteilhaft im äquivalenten Verhältnis wie Hexamethylendiammoniumadipat, Hexamethylendiammoniumterephthalat oder Tetramethylendiammoniumadipat, bevorzugt Hexamethylendiammoniumadipat und Hexamethylendiammoniumterephthalat einsetzen. Besondere technische Bedeutung haben Polycaprolactam, Polyamide, die aus Hexamethylendiamin und Adipinsäure und Polyamide, die aus Caprolactam, Hexamethylendiamin, Isophthalsäure und/oder Terephthalsäure aufgebaut sind, erlangt.

Zur Herstellung von Vinylpolymeren geeignete Monomere sind Ethylen, Propylen, Butadien, Isopren, Chloropren, Vinylchlorid, Vinylidenchlorid, Vinylfluorid, Vinylidenfluorid, Styrol, α-Methylstyrol, Divinylbenzol, Acrylsäure, Methacrylat, Ethylacrylat, n-Propylacrylat, Isopropylacrylat, n-Butylacrylat, Isobutylacrylat, tert.-Butylacrylat, Methacrylsäure, Methylmethacrylat, Ethylmethacrylat, n-Propylmethacrylat, Isopropylmethacrylat, n-Butylmethacrylat, Isobutylmethacrylat, tert.-Butylmethacrylat, Acrylamid, Methacrylamid, Ethylacrylamid, n-Propylacrylamid, Isopropylacrylamid, Acrylnitril, Vinylalkohol, Norbonadien, N-Vinylcarbazol, Vinylpyridin, 1-Buten, Isobuten, Vinylidencyanid, 4-Methylpenten-1-vinylacetat, Vinylisobutylether, Methylvinylketon, Vinylvinylketon, Methylvinylether, Vinylvinylether, Vinylvinylsulfid und Acrolein. Diese Monomeren können alleine oder in Kombiation untereinander verwendet werden. Bevorzugte Vinylpolymere sind Polystyrol, insbesondere syndiotaktisches Polystyrol, Polyethylen, Polypropylen und Polyvinylchlorid.

Des weiteren sind Polyester als thermoplastische Kunststoffe geeignet, bevorzugt auf der Basis von Terephthalsäure und Diolen, besonders bevorzugt sind Polyethylenterephthalat und Polybutylenterephthalat.

Weitere geeignete thermoplastische Kunststoffe sind Polycarbonate, Polyketone und Polyaldehyde wie Polyoxymethylen.

### Komponente B: Phyllosilikate

Unter einem Phyllosilikat (Schichtsilikat) versteht man im allgemeinen Silikate, in welchen die SiO₄-Tetraeder in zweidimensionalen unendlichen Netzwerken verbunden sind. (Die empirische Formel für das Anion lautet (Si₂O₅²)ₙ Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.

Als Beispiele fiir synthetische und natürliche Phyllosilikate (Schichtsilikate) seien Montmorillonit, Smectit, Illit, Sepiolit, Palygorskit, Muscovit, Allevardit, Amesit, Hectorit, Fluorhectorit, Saponit, Beidellit, Talkum, Nontronit, Stevensit, Bentonit, Glimmer, Vermiculit, Fluorvermiculit, Halloysit und Fluor enthaltende synthetische Talkum-Typen genannt.

Unter einem delaminierten bzw. hydrophobierten Phyllosilikat im Sinne der Erfindung sollen Phyllosilikate verstanden werden, bei welchen durch Umsetzung mit sogenannten Hydrophobierungsmitteln und gegebenenfalls anschließender Monomerzugabe (sog. Quellung z.B. mit Caprolactam) die Schichtabstände zunächst vergrößert werden.

Die Schichtdicken derartiger Silikate vor der Delaminierung betragen üblicherweise von 5 bis 100 Å, vorzugsweise 5 bis 50 Å und insbesondere 8 bis 25 Å (Abstand von einer Schichtoberkante bis zur folgenden Schichtoberkante).

Durch anschließende Polykondensation oder Mischung z.B. durch Konfektionierung des hydrophobierten und gegebenenfalls gequollenen Phyllosoilikates mit thermoplastischen Kunststoffen (Komponente A), bevorzugt mit Polyamiden, erfolgt die Delaminierung der Schichten, welche im thermoplastischen Nanocomposite vorzugsweise zu einem Schichtabstand von mindestens 40 Å, vorzugsweise mindestens 50 Å führen.

Zur Vergrößerung der Schichtabstände (Hydrophobierung) können die Phyllosilikate (vor der Herstellung der erfindungsgemäßen thermoplastischen Nanocomposites) mit sogenannten Hydrophobierungsmitteln umgesetzt werden. Diese werden oft auch als Oniumionen oder Oniumsalze bezeichnet.

Die Kationen der Phyllosilikate werden dabei durch organische Hydrophobierungsmittel ersetzt, wobei durch die Art des organischen Restes die gewünschten Schichtabstände eingestellt werden können, die sich nach der Art des jeweiligen Monomeren oder Polymeren, in welches das Phyllosilikat eingebaut werden soll, richten.

Der Austausch der Metallionen kann vollständig, teilweise oder gar nicht erfolgen. Bevorzugt ist ein vollständiger Austausch der Metallionen. Die Menge der austauschbaren Metallionen wird üblicherweise in Milliäquivalenten (meq) pro 100 g Phyllosilikat angegeben und als Ionenaustauschkapazität bezeichnet.
Bevorzugt sind Phyllosilikate mit einer Kationenaustauschkapazität von mindestens 50, vorzugsweise 80 bis 130 meq/100 g.

Geeignete organische Hydrophobierungsmittel leiten sich von Oxonium-, Ammonium-, Phosphonium- und Sulfoniumionen ab, welche einen oder mehrere organische Reste tragen können.

Als geeignete Hydrophobierungsmittel seien solche der allgemeinen Formel I und/oder II genannt: 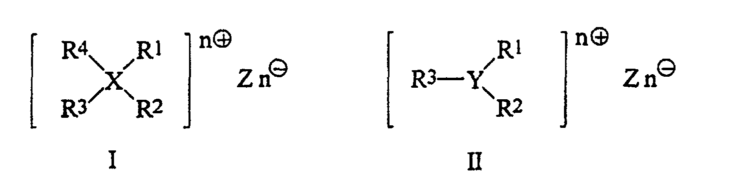 wobei die Substituenten folgende Bedeutung haben:
- R¹, R², R³, R⁴: unabhängig voneinander Wasserstoff, einen geradkettigen verzweigten, gesättigten oder ungesättigten Kohlenwasserstoffrest mit 1 bis 40, vorzugsweise 1 bis 20 C-Atomen, welcher gegebenenfalls mindestens eine funktionelle Gruppe tragen kann oder 2 der Reste miteinander verbunden sind, insbesondere zu einem heterocyclischen Rest mit 5 bis 10 C-Atomen, und
- X: für Phosphor oder Stickstoff,
- Y: fiir Sauerstoff oder Schwefel,
- n: fiir eine ganze Zahl von 1 bis 5, vorzugsweise 1 bis 3 und
- Z: für ein Anion
steht.

Geeignete funktionelle Gruppen sind Hydroxyl-, Nitro- oder Sulfogruppen, wobei Carboxylgruppen besonders bevorzugt sind, da durch derartige funktionelle Gruppen eine verbesserte Anbindung an die Endgruppen des Polyamids erfolgt.

Geeignete Anionen Z leiten sich von Protonen liefernden Säuren, insbesondere Mineralsäuren ab, wobei Halogene wie Chlor, Brom, Fluor, Iod, Sulfat, Sulfonat, Phosphat, Phosphonat, Phosphit und Carboxylat, insbesondere Acetat, bevorzugt sind.

Die als Ausgangsstoffe verwendeten Phyllosilikate werden in der Regel in Form einer Suspension umgesetzt. Das bevorzugte Suspendiermittel ist Wasser, gegebenenfalls in Mischung mit Alkoholen, insbesondere niederen Alkoholen mit 1 bis 3 Kohlenstoffatomen. Es kann vorteilhaft sein, zusammen mit dem wäßrigen Medium einen Kohlenwasserstoff, zum Beispiel Heptan, einzusetzen, da die hydrophobierten Phyllosilikate mit Kohlenwasserstoffen gewöhnlich verträglicher sind als mit Wasser.

Weitere geeignete Beispiele für Suspendiermittel sind Ketone und Kohlenwasserstoffe. Gewöhnlich wird ein mit Wasser mischbares Suspendiermittel bevorzugt. Bei der Zugabe des Hydrophobierungsmittels zum Phyllosilikat tritt ein Ionenaustausch ein, wodurch das Phyllosilikat üblicherweise aus der Lösung ausfällt. Das als Nebenprodukt des Ionenaustausches entstehende Metallsalz ist vorzugsweise wasserlöslich, so daß das hydrophobierte Phyllosilikat als kristalliner Feststoff durch z.B. Abfiltrieren abgetrennt werden kann.

Der Ionenaustausch ist von der Reaktionstemperatur weitgehend unabhängig. Die Temperatur liegt vorzugsweise über dem Kristallisationspunkt des Mediums und unter seinem Siedepunkt. Bei wäßrigen Systemen liegt die Temperatur zwischen 0 und 100 °C, vorzugsweise zwischen 40 und 80 °C.

Für Polyamide als Komponente A sind Alkylammoniumionen bevorzugt, welche insbesondere durch Umsetzung von geeigneten Aminocarbonsäuren, bevorzugt ω-Aminocarbonsäuren wie co-Aminododecansäure, ω-Aminoundecansäure, ω-Aminobuttersäure, ω-Aminocarpylsäure oder ω-Aminocapronsäure mit üblichen Mineralsäuren, beispielsweise Salzsäure, Schwefelsäure oder Phosphorsäure oder Methylierungmitteln wie Methyliodid erhältlich sind.

Weitere bevorzugte Alkylammoniumionen sind Laurylammonium-, Myrilstylammonium, Palmitylammonium-, Stearylammonium-, Pyridinium-, Octadecylammonium-, Monomethyloctadecylammonium- und Dimethyloctadecylammoniumionen.

Als geeignete Phosphoniumionen seien beispielsweise Docosyltrimethylphosphonium, Hexatriacontyltricyclohexylphosphonium, Octadecyltriethylphosphonium, Eicosyltriisobutylphosphonium, Methyltrinonylphosphonium, Ethyltrihexadecylphosphonium, Dimethyldidecylphosphonium, Diethyldioctadecylphosphonium, Octadecyldiethylallylphosphonium, Trioctylvinylbenzylphosphonium, Dioctyldecylethylhydroxyethylphosphonium, Docosyldiethyldichlorbenzylphosphonium, Octylnonyldecylpropargylphosphonium, Triisobutylperfluordecylphosphonium, Eicosyltrihydroxymethylphosphonium, Triacontyltriscyanethylphosphonium und Bis-trioctylethylendiphosphonium genannt.

Weitere geeignete Hydrophobierungsmittel sind u.a. in der WO 93/4118, WO 93/4117, EP-A 398 551 und DE-A 36 32 865 beschrieben.

Nach der Hydrophobierung weisen die Phyllosilikate im allgemeinen einen Schichtabstand von 10 bis 50 Å , vorzugsweise von 13 bis 40 Å auf. Der Schichtabstand bedeutet üblicherweise den Abstand von der Schichtunterkante der oberen Schicht zur Schichtoberkante der unteren Schicht.

So weit wie möglich wird das auf die vorstehende Weise hydrophobierte Phyllosilikat von Wasser befreit, beispielsweise durch Trocknen, wie Sprühtrocknen. Im allgemeinen enthält das so behandelte hydrophobierte Phyllosilikat von 0 bis 10 Gew.-%, bevorzugt von 0 bis 5 Gew.-% Wasser. Anschließend kann das hydrophobierte Phyllosilikat als Suspension in einem möglichst wasserfreien Suspendiermittel, wobei sich z.B. von den oben genannten vor allem die Alkohole oder die nieder siedenden Alkane eignen oder als Feststoff, z.B. mit Polyamid-Monomeren, gemischt. Bevorzugt werden die hydrophobierten Phyllosilikate als Feststoff eingesetzt.

Hierbei ist es möglich, den Schichtabstand weiter zu vergrößern, indem man das Phyllosilikat mit Polyamidmonomeren z.B. bei Temperaturen von 25 bis 300 °C, vorzugsweise von 80 bis 280 °C und insbesondere von 80 bis 260 °C über eine Verweilzeit von in der Regel von 5 bis 120 Min., vorzugsweise von 10 bis 60 Min., umsetzt (sog. Quellung). Je nach Dauer der Verweilzeit und Art des gewählten Monomeren vergrößert sich der Schichtabstand zusätzlich um 10 bis 150 Å, vorzugsweise um 10 bis 50 Å. Die Länge der Blättchen beträgt üblicherweise bis zu 2000 Å, vorzugsweise bis zu 1500 Å. Etwa vorhandene oder sich aufbauende Präpolymere tragen in der Regel ebenfalls zur Quellung der Schichtsilikate bei.

### Komponente C: Kautschuk oder Kautschukmischungen

Erfindungsgemäß wird ein Kautschuk mit mindestens einer Phase (z.B. Kern, Zwischenschale oder äußere Schale) mit einer Glasübergangstemperatur T_{g} < 0 °C, bevorzugt < -10 °C, besonders bevorzugt < -15 °C eingesetzt (weiche Phase). Solche Kautschuke sind beispielsweise Polybutadien, Polyisopren und ihre Derivate, Polysiloxane, Poly(meth)acrylate und Polyethylen- und Polypropylencopolymere wie EPDM (Ethylen/Propylen-Dien-Terpolymere)-Kautschuke. Diese Kautschuke können weitere Monomereinheiten enthalten, deren daraus aufgebaute Polymere eine Glasübergangstemperatur T_{g} > 0 °C besitzen. Beispiele dafür sind Styrol, (Meth)acrylnitril sowie (Meth)acrylate. Als weitere Comonomereinheiten können Einheiten mit reaktiven Gruppen wie (Meth)acrylsäure, andere Carbonsäuren und ihre Derivate eingesetzt werden. Beispiele dafür sind (Meth)acrylsäure, t-Butylacrylat, Glycidyl(meth)acrylat und (Meth)acrylamid.

Diese kautschukartige Phase kann die einzige Phase sein, jedoch ist es bevorzugt, Kautschuke einzusetzen, deren Teilchen mehrere Phasen aufweisen. Besonders bevorzugt weist eine dieser Phasen eine Glasübergangstemperatur T_{g} > 0 °C auf (harte Phase). Als harte Phase können beispielsweise Ester der (Meth)acrylsäure und andere Carbonsäuren und ihre Derivate, Styrol und Acrylnitril verwendet werden. Des weiteren können diese Phasen Monomere mit reaktiven Gruppen enthalten, z.B. (Meth)acrylsäure, t-Butylacrylat, Gycidyl(meth)acrylat und (Meth)acrylamid.

Ein typischer Teilchenaufbau der bevorzugten mehrphasigen Kautschuke ist ein Kern mit einer oder mehreren Schalen, wobei die Kautschukphase oder -phasen Kern, äußere oder Zwischenschalen sein können (Kern/Schale-Kautschuk).

Die erfindungsgemäß eingesetzten Kautschuke werden üblicherweise mit dem Emulsionspolymerisationsverfahren hergestellt, wie es z.B. in Emulsion Polymerization and Emulsion Polymers, Edited by P. Lovel and M. El-Aasser, John Wiley and Sons, 1997 und Encyclopaedia of Polymer Science and Engineering, Vol. 6, John Wiley and Sons, 1986, beschrieben ist. Die erfindungsgemäß eingesetzten Kautschuke haben nach ihrer Herstellung eine teilchenförmige Morphologie.

Mit dem Ausdruck Kern/Schale-Kautschuk wird ein Kautschukteilchen gemeint, bei dem in der Emulsionspolymerisation ein erstes Monomer oder eine erste Monomermischung polymerisiert wird (Kern). Während oder am Ende dieses Polymerisationsschrittes werden weitere Monomere oder Monomermischungen zur Reaktion zugegeben (1. Schale) und weiter polymerisiert. Dieser Vorgang kann bei Bedarf mehrmals wiederholt werden (weitere Schalen). Auf diese Weise werden Polymerteilchen mit verschiedenen Phasen aufgebaut.

Alle Phasen können Vernetzer oder pfropfaktive Monomere enthalten. Beispiele dafür sind Divinylbenzol, Allyl(meth)acrylat, Butandioldiacrylat und Dihydrodicyclopentadienylacrylat. Im allgemeinen werden diese Vernetzer oder pfropfaktiven Monomere in einer Menge von 0 bis 10 Gew.-%, bevorzugt 0,2 bis 6 Gew.-%, besonders bevorzugt 0,5 bis 4 Gew.-%, bezogen auf die Monomeren der jeweiligen Phase, verwendet.

Die Komponente (C) enthält vorzugsweise eine Kautschukphase oder -phasen (weiche Phase) enthaltend über 50 Gew.-%, bevorzugt über 60 Gew.-%, besonders bevorzugt über 75 Gew.-% Polybutadien- oder Polybutyl- oder Ethylhexylacrylateinheiten und eine harte Phase oder harte Phasen, enthaltend über 70 Gew.-%, bevorzugt über 80 Gew.-%, besonders bevorzugt über 85 Gew.-% Monomereinheiten aus Methylmethacrylat, Styrol oder Acrylnitril, wobei die harte Phase (Meth)acrylsäure oder t-Butylacrylat in einer Menge von im allgemeinen bis zu 30 Gew.-%, bevorzugt bis zu 20 Gew.-%, besonders bevorzugt bis zu 15 Gew.-% enthalten können.

Die erfindungsgemäß eingesetzten Kautschuke besitzen eine definierte Teilchengrößenverteilung mit einem d(50)-Wert zwischen 15 nm und 500 nm, bevorzugt zwischen 20 nm und 250 nm.

In Emulsionen hergestellte Kautschuke für Polyamid als bevorzugte Komponente (A) sind z.B. in EP-A 0 125 483, EP-A 0 001 245 und EP-A 0 083 446 beschrieben.

### Komponente (D): Füllstoffe

Als Füllstoffe eignen sich teilchen- oder faserförmige Füllstoffe. Als teilchenförmige Füllstoffe eignen sich Carbonate wie Magnesiumcarbonat (Kreide). Bevorzugt werden faserförmige Füllstoffe eingesetzt. Beispiele geeigneter faserförmiger Füllstoffe sind Kohlenstoffasern, Kaliumtitanatwhisker, Aramidfasern oder Glasfasern. Besonders bevorzugt werden Glasfasern verwendet. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm. Die Einarbeitung der Glasfasern kann sowohl in Form von Kurzglasfasern als auch in Form von Endlossträngen (Rovings) erfolgen. Kohlenstoff- oder Glasfasern können auch in Form von Geweben, Matten oder Glasseidenrovings eingesetzt werden. Die Füllstoffe können in Mengen von im allgemeinen 0 bis 50 Gew.-%, bevorzugt 15 bis 40 Gew.-%, besonders bevorzugt 20 bis 35 Gew.-%, bezogen auf das Gesamtgewicht der Zusammensetzungen, enthalten sein.

### Komponente (E): Zusatzstoffe

Die Zusammensetzungen können darüber hinaus Zusatzstoffe enthalten. Als solche Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen von 0 bis 50 Gew.-%, bevorzugt bis zu 30 Gew.-%, besonders bevorzugt von 1 bis 25 Gew.-%, bezogen auf das Gesamtgewicht der Zusammensetzung.

Pigmente und Farbstoffe sind allgemein in Mengen von 0 bis 4 Gew.-%, bevorzugt von 0,5 bis 3,5 Gew.-% und besonders bevorzugt von 0,5 bis 3 Gew.-%, bezogen auf das Gesamtgewicht der Zusammensetzungen, enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃ · Pb(OH)₂), Lithopone, Antimonweiß und Titandioxid. Von den beiden gebräuchlichsten Kristallmodikfikationen (Rutil- und Anatas-Typ) des Titandioxids wird insbesondere die Rutilform zur Weißfärbung der erfindungsgemäßen thermoplastischen Nanocomposites verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnaceoder Gasruß eingesetzt wird (siehe hierzu G. Benzing, Pigmente für Anstrichmittel, Expert-Verlag (1988), S. 78 ff.).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden Bromiden oder Iodiden. Die Halogenide, insbesondere des Kupfers, können auch noch elektronenreiche π-Liganden enthalten. Als Beispiel fiir derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, im allgemeinen in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

### Verfahren zur Herstellung der erfindungsgemäßen thermoplastischen Nanocomposites

Die Herstellung der erfindungsgemäßen thermoplastischen Nanocomposites kann auf unterschiedlichen Wegen erfolgen.

### 1. In-situ-Methode

In der In-situ-Methode wird das hydrophobierte Phyllosilikat (B) (z.B. Cloisite 30A® von Southern Clay Products, Laporte Co., England) in Suspension oder als Feststoff mit zu dem thermoplastischen Kunststoff (A) polymerisierbaren Monomeren gemischt. Es folgt eine Quellung des hydrophobierten Phyllosilikats mit den Monomeren. Die anschließende Polymerisation der Monomere kann in üblicher Weise durchgeführt werden. Die so erhaltenen Nanocomposites werden anschließend mit der Komponente (C) und gegebenenfalls weiteren Komponenten (D) und (E) konfektioniert.

Dazu werden die zur Komponente (A) (thermoplastische Kunststoffe) polymeriserbaren Monomere zu den in einem Lösungsmittel, bevorzugt in einem Alkohol, besonders bevorzugt in Methanol suspendierten hydrophobierten Phyllosilikaten (B) gegeben und in Gegenwart von im allgemeinen 0,1 bis 8 Gew.-%, bevorzugt von 0,1 bis 7 Gew.-% Wasser, bezogen auf die Monomeren. polymerisiert. Bevorzugt wird die Polymerisation in Gegewart von mehr als 0,2 Gew.-% Wasser, beispielsweise von 0,25 bis 6 Gew.-% Wasser durchgeführt. Besonders bevorzugt sind Wassermengen im Bereich von 0,3 bis 5 Gew.-%, insbesondere 0,5 bis 5 Gew.-%, beispielsweise im Bereich von 0,3 bis 4,5 Gew.-% Wasser, bezogen auf die Monomeren. Unter diesen Bedingungen ist die Geschwindigkeit der Polymerisation hinreichend groß.

Das Wasser kann der Suspension zugegeben werden. Enthalten diese Suspensionen bereits Wasser, wird entweder kein weiteres Wasser zugegeben oder nur soviel Wasser zugesetzt, daß die Gesamtmenge an Wasser, bezogen auf die Monomeren, in dem erfindungsgemäßen Bereich liegt.

Um eine möglichst gute Durchmischung zu erhalten, wird die Suspension vorteilhafterweise gerührt, besonders bevorzugt mit hoher Scherung. Hierzu eignen sich z.B. Rührkessel. Anschließend wird im allgemeinen das Wasser auf einmal, in Portionen oder kontinuierlich zugegeben, wobei die Temperaturen der Suspension im allgemeinen im Bereich von 70 bis 100 °C, bevorzugt im Bereich von 75 bis 95 °C liegen. Die Temperatur der wasserhaltigen Suspension wird entweder gleichzeitig oder anschließend in der Regel auf 180 bis 330 °C, bevorzugt 220 bis 320 °C erhöht. Die Suspension kann entweder in dem Aggregat verbleiben, in dem sie hergestellt wurde, oder vor oder nach der Temperaturerhöhung oder vor oder nach der Wasserzugabe in ein anderes Reaktionsgefäß überführt werden. Besonders vorteilhaft wird die Polymerisation unter gleichzeitiger Scherung durchgeführt, wobei vorzugsweise Scherspannungen gemäß DIN 11 443 von 10 bis 10⁵ Pa, insbesondere 10² bis 10⁴ Pa vorliegen.

Diverse Verfahrensführungen können für die Herstellung der erfindungsgemäßen Zusammensetzungen angewendet werden. Die Herstellung kann z.B. mittels eines diskontinuierlichen (Batchprozeß) oder eines kontinuierlich geführten Verfahrens erfolgen.

Bei dem diskontinuierlichen Verfahren kann die wasserhaltige Suspension bei den oben angegebenen Temperatur- und Scherbedingungen und unter Druck polymerisiert werden. Der Druck liegt dabei in der Regel im Bereich von 5 bis 30 bar, bevorzugt im Bereich von 8 bis 20 bar (absolut). Die Verweilzeiten sind dabei im wesentlichen von den gewählten Temperaturen während der Polymerisation abhängig und liegen in der Regel im Bereich von 0,5 bis 3 h. Im allgemeinen wird nach Erreichen des Gleichgewichtsumsatzes das Wasser verdampft und der Druck auf Atmosphärendruck erniedrigt. Noch in der Schmelze vorhandenes Wasser kann auch bei diesem Druck zu weiterem Molekulargewichtsaufbau führen. Anschließend wird das Reaktionsgemisch ausgetragen, beispielsweise in Form von Schmelzprofilen, abgekühlt, zweckmäßigerweise, indem es durch ein Wasserbad geleitet wird, und zerkleinert, bevorzugt granuliert. In der Regel weisen so erhaltene, bevorzugt hergestellte Polyamide Molekulargewichte von bis zu 22000 g/mol, bevorzugt im Bereich von 8000 bis 22000 g/mol auf.

Das kontinuierliche Verfahren wird nach einer bevorzugten Ausführungsform in der Regel so ausgeführt, daß man die wasserhaltige Suspension, deren Temperatur im Bereich von 70 bis 100 °C, bevorzugt von 75 bis 95 °C beträgt, kontinuierlich einer ersten Reaktionszone zuführt und dort unter den oben angegebenen Temperatur- und Scherbedingungen polymerisiert. Gemäß einer besonderen Ausführungsform können der ersten Reaktionszone außer der wäßrigen Suspension noch Präpolymere anderer oder der gleichen Monomere zugeführt werden. Diese können beispielsweise aus der Extraktion von Produktgranulat stammen (s. unten). Der Druck in der ersten Reaktionszone liegt im allgemeinen unter 5 bar (absolut). Er kann beispielsweise von 1 bis 3 bar (absolut) betragen.

Die Verweilzeit, die im wesentlichen von Temperatur, Druck und Wassergehalt des Reaktionsgemisches abhängt, wählt man in der Regel im Bereich von 2 bis 5 h, bevorzugt von 3 bis 4 h. Werden Präpolymere zu der ersten Reaktionsstufe zudosiert, sind die Verweilzeiten im allgemeinen kürzer als 2 h, beispielsweise 0,5 bis 1 h. In der ersten Reaktionszone wird bei Einsatz von Caprolactoam üblicherweise bis zu einem Molekulargewicht von 3000 g/mol oder darüber, bevorzugt im Bereich 5000 bis 7000 g/mol polykondensiert. Die Endgruppensummenkonzentration kann hierbei beispielsweise im Bereich von 200 bis 600 mmol/kg, vorzugsweise von 300 bis 400 mmol/kg liegen.

Aus der ersten Reaktionszone wird die Reaktionsmischung in eine zweite Reaktionszone geleitet. Bevorzugt ist das Reaktionsgefäß der zweiten Reaktionszone, das beispielsweise röhrenförmig sein kann, mit Einbauten ausgestattet. Dazu zählen geordnete Mischelemente wie Füllkörper (z.B. Raschigringe, Kugeln oder Pallringe), damit vorzugsweise eine Mindestverweildauer der noch nicht umgesetzten Monomere in der Schmelze (zwecks Erzielung eines hohen Umsatzes) gewährleistet ist, und Zonen, in denen kein oder nur ein minimaler Transport der Schmelze erfolgt ("Totzonen"), sowie eine Rückvermischung möglichst vermieden wird. Die Temperaturen in der zweiten Reaktionszone liegen im allgemeinen im selben Bereich wie die in der ersten Reaktionszone. Die Verweilzeit in der zweiten Reaktionszone kann je nach Monomerart, Temperatur, Druck und Beschaffenheit des Reaktionsgefäßes in weiten Grenzen variieren. Im allgemeinen ist die Verweilzeit in der zweiten Reaktionszone dann länger, wenn in der ersten Reaktionszone kein Präpolymer zugegeben wurde. Die Polymerschmelze wird aus der zweiten Reaktionszone im allgemeinen in Form von Schmelzprofilen ausgetragen, mittels eines Wasserbades abgekühlt und zerkleinert, bevorzugt granuliert. So erhaltenen Polyamide können z.B. Molekulargewichte im Bereich von 12000 bis 22000 g/mol aufweisen.

Sowohl die nach dem diskontinuierlichen als auch nach dem kontinuierlichen Verfahren erhaltenen Zusammensetzungen können noch flüchtige Bestandteile wie eingesetztes Lactam (beispielsweise bei Polymerisation von Caprolactam) und weitere Monomereinheiten sowie wasserdampfflüchtige Oligomere aufweisen. Diese entfernt man in der Regel mit Wasser aus dem Polymergranulat durch Gegenstromextraktion (s. z.B. DD-A 206999). Eine weitere Möglichkeit ist die Gasphasenextraktion (s. EP-A 0 284 968) mit gleichzeitigem Molekulargewichtsaufbau, bei der mittels überhitztem Wasserdampf gleichzeitig extrahiert und getempert werden kann. In einer bevorzugten Ausführungsform führt man die flüchtigen Bestandteile kontinuierlich quantitativ in den Prozeß zurück, d.h. vorzugsweise in die erste Reaktionszone. Hierzu wird bevorzugt das Extraktionswasser auf einen Extraktgehalt von höchstens 85 Gew.-% aufkonzentriert und der Wassergehalt des erhaltenen Konzentrates durch Zugabe von frischen Monomeren so eingestellt, daß die Polymerisation in Gegenwart der erfindungsgemäßen Wassermenge ausgeführt werden kann. Wird die Polymerisation auf diese Weise durchgeführt, wird in der Regel während der Polymerisation mindestens eine adiabatische Entspannung zur Verringerung des Wassergehaltes vorgenommen (s. DE-A-19 752 181).

Die gewünschte Viskositätszahl des Endprodukts kann man auch in an sich bekannter Weise durch Trocknung beziehungsweise bei der Temperung in fester Phase durch Polymerisation einstellen.

Die gewünschte Viskositätszahl des Endprodukts liegt hierbei im allgemeien im Bereich von 80 bis 350 ml/g, bevorzugt 120 bis 200 ml/g (gemessen an 0,5 Gew.-%iger Lösung in 95 gew.-%iger Schwefelsäure, nach Abtrennen der unlöslichen Bestandteile).

Die so erhaltenen Nanocomposites werden mit der Komponente (C) (Kautschuk oder Kautschukmischungen) und gegebenenfalls weiteren Komponenten (D) und (E) nach üblichen Verfahren, z.B. mittels Extrusion, konfektioniert.

Die nach dem erfindungsgemäßen Verfahren hergestellten Zusammensetzungen enthalten im allgemeinen von 10 bis 99,89 Gew.-%, bezogen auf das Gesamtgewicht der Zusammensetzungen, thermoplastische Kunststoffe (Komponente A) und von 0,1 bis 15 Gew.-%, bevorzugt von 1 bis 10 Gew.-%, besonders bevorzugt 2 bis 4 Gew.-%, bezogen auf das Gesamtgewicht der Zusammensetzungen, Kautschuk oder Kautschukmischungen (Komponente C). Der Anteil der delaminierten Phyllosilikate (Komponente B) beträgt im allgemeinen von 0,01 bis 15 Gew.-%, bevorzugt von 1 bis 12 Gew.-%, besonders bevorzugt von 4 bis 10 Gew.-%, bezogen auf das Gesamtgewicht der Zusammensetzungen. Dabei wird der Anteil die Komponente B durch Veraschen der Zusammensetzungen bestimmt.

### 2. Melt intercalation

In einer weiteren bevorzugten Ausführungsform können die erfindungsgemäßen thermoplastischen Nanocomposites dadurch erhalten werden, daß man den thermoplastischen Kunststoff (Komponente A), das hydrophobierte Phyllosilikat (Komponente B) und den Kautschuk oder Kautschukmischungen (Komponente C) nach allgemein bekannten Verfahren, z.B. mittels Extrusion bei Temperaturen im Bereich von 160 bis 260 °C, besonders bevorzugt bei 240 bis 260 °C mischt. Dazu eignet sich bevorzugt ein Zweischneckenextruder mit hoher Scherung.

Die Komponente C kann in beiden Wegen naß (in Form einer Emulsion) oder trocken zugegeben werden. Wird die Komponente C trocken zugegeben, so kann die Trocknung beispielsweise durch Fällung oder Sprühtrocknung erfolgen.

Die erhaltenen erfindungsgemäßen thermoplastischen Nanocomposites zeichnen sich insbesondere durch eine hervorragende Zähigkeit bei sehr guter Steifigkeit aus.

Die erfindungsgemäßen thermoplastischen Nanocomposites können zur Herstellung von Formkörpern verwendet werden. Solche Formkörper können vorzugsweise durch Extrusion, Tiefziehen oder Spritzgußverarbeitung hergestellt werden.

Ein weiterer Gegenstand der vorliegenden Erfindung sind daher Formkörper, erhältlich unter Verwendung der erfindungsgemäßen Nanocomposites.

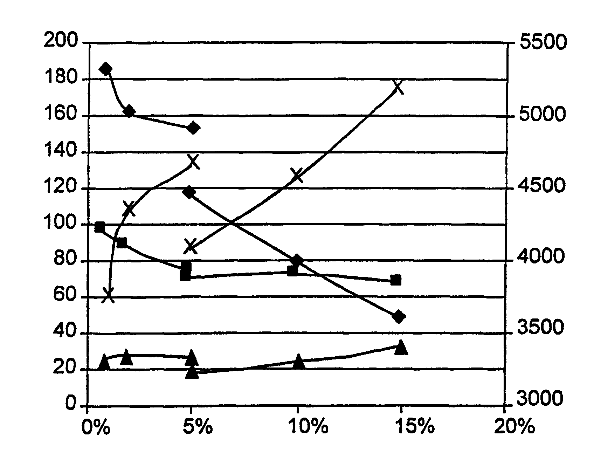

Fig.1 zeigt einen Vergleich der Bruchspannung in MPa (Quadrate), der Streckdehnung x 10 in % (Dreiecke), der Kerbschlagzähigkeit nach Charpy leU in kJ/m² (Kreuze) und des Elastizitätsmoduls in MPa (Rauten) von thermoplastischen Nanocomposites mit Cloisite 30 A® (von Southern Clay Products Laporte Co., England) als Komponente B. Diese sind mit
a) einem konventionellen Schlagzähmodifier (Lupolen® KR 1270 BASF AG, Teilchengröße: ≦ 1 µm) beziehungsweise
b) einem erfindungsgemäß eingesetzten Emulsionskautschuk (Komponente C) (Teilchengröße: 40 nm) modifiziert.

Auf der Abszisse ist der erforderliche Anteil des jeweiligen Schlagzähmodifiers an der Gesamtmasse des thermoplastischen Nanocomposites angegeben.

Auf der linken Ordinatenachse ist die Bruchspannung in MPa und die Schlagzähigkeit in kJ/m² und auf der rechten Ordinatenachse das E-Modul in MPa angegeben.

Aus Fig. 1 wird deutlich, daß zur Erreichung guter Gesamteigenschaften des thermoplastischen Nanocomposites ein geringerer Anteil des erfindungsgemäß eingesetzten Kautschuks mit geringer, definierter Teilchengröße (Komponente C) notwendig ist (siehe: linker Teil von Fig.1) als eines konventionellen Schlagzähmodifiers mit größerer Teilchengröße (siehe: rechter Teil von Fig. 1).

Die exakten Werte für die Bruchspannung, Streckdehnung, Kerbschlagzähigkeit und das Elastizitätsmodul sind der folgenden Tabelle zu entnehmen.

Die nachfolgenden Beispiele erläutern die Erfindung zusätzlich.

### Beispiele

### Komponente B

Cloisite 30 A® (Southern Clay Products, Laporte Co., England)
(bereits hydrophobiertes Phyllosilikat)

### Herstellung der Komponente C

In einem Kolben wurden unter Rühren und Stickstoff folgende Produkte vorgelegt:
3588,1 g Wasser
472,5 g einer 40%igen Lösung eines Natriumsalzes einer C12- C18-Paraffinsulfonsäure in Wasser
5,7 g Kaliumpersulfat
und auf 65 °C aufgeheizt. 250 ml des Zulaufs 1 wurden zugegeben, 10 Minuten anpolymerisiert, und der Rest von Zulauf 1 wurde in 190 Minuten zudosiert und in 60 Minuten auspolymerisiert.

### Zulauf 1

1852,2 g n-Butylacrylat
37,8 g Dihydrodicyclopentadienylacrylat

Zu dieser Dispersion wurden bei 65 °C
1257,3 g Wasser und
2,0 g Kaliumpersulfat
zugegeben, gefolgt durch Zulauf 2, in insgesamt 50 Minuten. Danach wurde 60 Minuten lang auspolymerisiert.

### Zulauf 2

573,8 g Mehtylmethacrylat
101,2 g t-Butylacrylat
Danach erfolgt die Zugabe von
251,5 g Wasser
0,4 g Kaliumpersulfat
gefolgt durch einen Zulauf aus
126,9 g Methylmethacrylat und
8,1 g Methacrylsäure
über 20 Minuten. Die Reaktion wurde danach bei 65 °C 105 Minuten weiter polymerisiert.

Die Dispersion wurde bei - 20°C ausgefroren, abgesaugt, gewaschen und bei 40 C unter Vakuum getrocknet.

### Herstellung der erfindungsgemäßen thermoplastischen Nanocomposites

### WEG I

### Beispiele 1-3:

### Herstellung eines Polyamid 6 Nanocomposites (Herstellung der Komponente A in Gegenwart der Komponente B)

3 kg des Polymeren A sowie 0,9 kg des Schichtsilikates C wurden in 28 kg Caprolactam gelöst bzw. suspendiert. Nach Zugabe von 1000 g Wasser wurde die Mischung in einem Rührkessel auf 250°C erhitzt, wobei der Innendruck 10 bar betrug. Nach einer Vorkondensation von 2 Stunden wurde das Gefäß über einen Zeitraum von 1,5 Stunden entspannt und anschließend 2,5 Stunden bei 250°C nachkondensiert.

Die Schmelze wurde dann aus dem Kessel ausgetragen und granuliert. Das Granulat wurde mit heißem Wasser extrahiert.
Konfektionierung des PA6 Nanocompositen mit Komponente C

### Vergleichsbeispiele 1-3:

### Statt Komponente C Lupolen KR 1270

### WEG II

### Beispiel 4: Einstufenprozess

### a) Hydrophobierung

In einem mit Rührer ausgestatteten 10 1 Druckgefäß wird eine Suspension aus 41 Methanol p.a., 80 g Montmorillonit, 20 g (0,14 mol) Di-2-hydroxyethylmethyl-stearylamin und 26,6 g (0,14 mol) para-Toluolsulfonsäure Monohydrat bereitet, unter N₂-Atmosphäre 6 h bei 75 °C intensiv gerührt und anschließend auf Raumtemperatur abgekühlt.

### b) Polymerisation

Die Polymerisation von Caprolactam wurde in Gegenwart von Komponente B und Komponente C durchgeführt.

### Vergleichsbeispiel 4:

Statt Komponente C Lupolen KR 1270

### WEG III

### Beispiel 5:

### Konfektionierung aller Einsatzstoffe (ZSK 30) bei 260 °C unter üblichen Bedingungen

### Vergleichsbeispiel 5:

Wie Beispiel 5, nur Lupolen KR 1270

### Anwendungstechnische Untersuchungen:

Die Viskositätszahl der Matrix wurde an 0,5 gew.-%igen Lösungen in Schwefelsäure bei 23°C bestimmt.

Das Elastizitätsmodul (E-Modul [N/mm²]) wurde nach DIN 53457 ermittelt.

Der Schmelzvolumenindex (MVI-Wert) wurde bei einer Temperatur von 275 °C und einer Belastung von 5 kg bestimmt.

Die Schlagzähigkeiten (aₙ [kJ/m²]) wurden an ungekerbten ISO-Stäben nach ISO 179-Teil I gemessen.

Die Ergebnisse sind in der Tabelle 1 zusammengestellt.

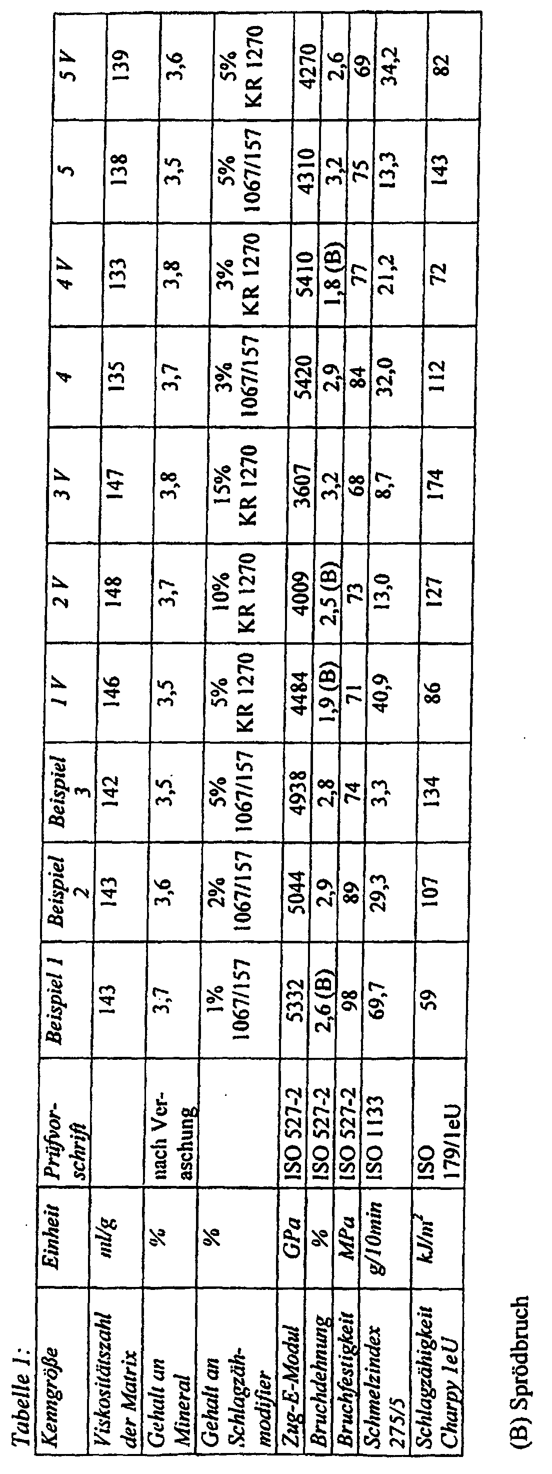

## Patentansprüche

1. Thermoplastische Nanocomposites, enthaltend
a) einen thermoplastischen Kunststoff (A),
b) mindestens eine Verbindung (B), die strukturell aus negativ geladenen Phyllosilikaten und zwischen diese eingelagerten Kationen aufgebaut ist (delaminierte Phyllosilikate), die gleichmäßig in der Komponente (A) dispergiert ist,
c) einen Kautschuk oder Kautschukmischungen (C),
**dadurch gekennzeichnet, daß** die Komponente (C) eine Teilchengrößenverteilung mit einem d(50)-Wert zwischen 15 nm und 500 nm aufweist.

2. Thermoplastische Nanocomposites nach Anspruch 1, enthaltend
a) 10 bis 99,89 Gew.-% der Komponente (A),
b) 0,01 bis 15 Gew.-% der Komponente (B),
c) 0,1 bis 15 Gew.-% der Komponente (C),
d) 0 bis 50 Gew.-% weiterer Füllstoffe (D),
e) 0 bis 50 Gew.-% weiterer Zusatzstoffe (E),
worin die Summe aller Komponenten 100 Gew.-% ergibt.

3. Thermoplastische Nanocomposites nach Anspruch 1 oder 2, **dadurch gekennzeichnet, daß** die Komponente (A) ein Polyamid ist.

4. Thermoplastische Nanocomposites nach einem der Ansprüche 1 bis 3, **dadurch gekennzeichnet, daß** die Komponente (C) in einem Anteil an der Gesamtmasse von 1 bis 10 Gew.-% enthalten ist.

5. Thermoplastische Nanocomposites nach einem der Ansprüche 1 bis 4, **dadurch gekennzeichnet, daß** die Komponente (C) ein Kautschuk oder eine Kautschukmischung mit mindestens einer Phase mit einer Glasübergangstemperatur T_{g} < 0 °C ist.

6. Thermoplastische Nanocomposites nach Anspruch 5, **dadurch gekennzeichnet, daß** die Komponente (C) ein Kern- / Schale-Kautschuk ist.

7. Verfahren zur Herstellung thermoplastischer Nanocomposites nach einem der Ansprüche 1 bis 6, **dadurch gekennzeichnet, daß** die Herstellung nach einer In-situ-Methode erfolgt, in der das delaminierte Phyllosilikat (B) in Suspension oder als Feststoff mit den zum thermoplastischen Kunststoff (A) polymerisierbaren Monomeren gemischt wird, eine Quellung des delaminierten Phyllosilikats (B) mit den Monomeren erfolgt, die anschließende Polymerisation der Monomere in üblicher Weise durchgeführt wird und die so erhaltenen Nanocomposites mit der Komponente (C) und gegebenenfalls weiteren Komponenten (D) und (E) konfektioniert werden.

8. Verfahren zur Herstellung thermoplastischer Nanocomposites nach einem der Ansprüche 1 bis 6, **dadurch gekennzeichnet, daß** die Herstellung durch Melt intercalation erfolgt, wobei der thermoplastische Kunststoff (Komponente A), das delaminierte Phyllosilikat (Komponente B) und der Kautschuk oder Kautschukmischungen (Komponente C) sowie gegebenenfalls die Komponenten (D) und (E) nach allgemein bekannten Verfahren gemischt werden.

9. Verfahren zur Herstellung von Formkörpern aus thermoplastischen Nanocomposites nach einem der Ansprüche 1 bis 6 durch Extrusion, Tiefziehen oder Spritzgußverarbeitung.

10. Formkörper erhältlich unter Verwendung von thermoplastischen Nanocomposites nach einem der Ansprüche 1 bis 6.

## Claims

1. A thermoplastic nanocomposite, comprising
a) a thermoplastic (A),
b) at least one compound (B) (delaminated phyllosilicate), whose structure has been built up from negatively charged phyllosilicates and from cations embedded between these, and which have been dispersed uniformly in component (A), and
c) a rubber or rubber mixtures (C),
wherein component (C) has a particle size distribution with a d(50) value of from 15 to 500 nm.

2. A thermoplastic nanocomposite as claimed in claim 1, comprising
a) from 10 to 99.89% by weight of component (A),
b) from 0.01 to 15% by weight of component (B),
c) from 0.1 to 15% by weight of component (C),
d) from 0 to 50% by weight of other fillers (D), and
e) from 0 to 50% by weight of other additives (E),
where the total of all of the components is 100% by weight.

3. A thermoplastic nanocomposite as claimed in claim 1 or 2, wherein component (A) is a polyamide.

4. A thermoplastic nanocomposite as claimed in any one of claims 1 to 3, wherein the proportion of component (C) present is from 1 to 10% by weight of the total weight.

5. A thermoplastic nanocomposite as claimed in any one of claims 1 to 4, wherein component (C) is a rubber or a rubber mixture with at least one phase with a glass transition temperature T_{g} < 0°C.

6. A thermoplastic nanocomposite as claimed in claim 5, wherein component (C) is a core-shell rubber.

7. A process for preparing thermoplastic nanocomposites as claimed in any one of claims 1 to 6, which comprises preparing the same by an in-situ method in which the delaminated phyllosilicate (B) is mixed, in suspension or as a solid, with the monomers polymerizable to give the thermoplastic (A), the delaminated phyllosilicate (B) is swelled with the monomers, the polymerization of the monomers is then carried out in a usual manner and the resultant nanocomposites are compounded with component (C) and, if desired, with other components (D) and (E).

8. A process for preparing thermoplastic nanocomposites as claimed in any one of claims 1 to 6, wherein the preparation takes place by melt intercalation, where the thermoplastic (component A), the delaminated phyllosilicate (component B) and the rubber or rubber mixtures (component C), and also, if desired, components (D) and (E), are mixed by well known processes.

9. A process for producing moldings from thermoplastic nanocomposites as claimed in any one of claims 1 to 6 by extrusion, thermoforming or injection molding.

10. A molding obtainable by using thermoplastic nanocomposites as claimed in any one of claims 1 to 6.

## Revendications

1. Nanocomposites thermoplastiques, contenant
a) un plastique thermoplastique (A),
b) au moins un composé (B), structurellement constitué de phyllosilicates chargés négativement et de cations intercalés entre eux (phyllosilicates délaminés), lequel composé est dispersé de manière régulière dans le composant (A),
c) un caoutchouc ou des mélanges de caoutchoucs (C),
**caractérisé en ce que** le composant (C) présente une distribution de la taille des particules ayant un d₅₀ entre 15 nm et 500 nm.

2. Nanocomposites selon la revendication 1, contenant
a) de 10 à 99,89% en poids du composant (A),
b) de 0,01 à 15% en poids du composant (B),
c) de 0,1 à 15% en poids du composant (C),
d) de 0 à 50% en poids d'autres matières de remplissage (D),
e) de 0 à 50% en poids d'autres additifs, (E) et
la somme de tous les composants totalisant 100% en poids.

3. Nanocomposites selon la revendication 1 ou 2, **caractérisés en ce que** le composant (A) est un polyamide.

4. Nanocomposites thermoplastiques selon l'une des revendications 1 à 3, **caractérisés en ce que** le composant (C) est présent en une fraction de 1 à 10% en poids par rapport à la masse totale.

5. Nanocomposites thermoplastiques selon l'une des revendications 1 à 4, **caractérisés en ce que** le composant (C) est un caoutchouc ou un mélange de caoutchoucs comportant au moins une phase ayant une température de transition vitreuse T_{g} < 0°C.

6. Nanocomposites thermoplastiques selon la revendication 5, **caractérisés en ce que** le composant (C) est un caoutchouc à noyau / gaine.

7. Procédé de préparation de nanocomposites thermoplastiques selon l'une des revendications 1 à 6, **caractérisé en ce que** la préparation est entreprise par un procédé in situ, dans lequel le phyllosilicate délaminé (B) est mélangé en suspension ou en tant que solide au monomère polymérisable avec le plastique thermoplastique (A), qu'il se produit un gonflement du phyllosilicate délaminé (B) avec le monomère, que la polymérisation subséquente est entreprise de manière usuelle et que les nanocomposites ainsi obtenus sont retravaillés avec le composant (C) et éventuellement d'autres composants (D) et (E).

8. Procédé de préparation de nanocomposites thermoplastiques selon l'une des revendications 1 à 6, **caractérisé en ce que** la préparation est entreprise par intercalation en fusion, où le plastique thermoplastique (A), le phyllosilicate délaminé (composant B) et le caoutchouc ou les mélanges de caoutchouc (composant C) ainsi qu'éventuellement les composants (D) et (E) sont mélangés par des procédés en soi connus.

9. Procédé de préparation de corps façonnés à base de nanocomposites thermoplastiques selon l'une des revendications 1 à 6 par extrusion, emboutissage profond ou retraitement par moulage par injection.

10. Corps façonnés que l'on peut obtenir en utilisant des nanocomposites thermoplastiques selon l'une des revendications 1 à 6.
